# EUROPEAN PATENT APPLICATION

(11) **EP 4 718 385 A1**
(43) Date of publication of application: **01.04.2026**
(21) Application number: 25205552.0
(22) Date of filing: 30.09.2025
(51) Int. Cl.: G06V 10/26, G06V 20/52

(54) **SYSTEM AND METHOD FOR SMART VIDEO DETECTION**

(30) Priority: 30.09.2024 US 202463701341 P
(71) Applicant: MacDonald, Dettwiler and Associates Inc., Brampton, Ontario L6Y 6K7 (CA)
(72) Inventor: Abu El Samid, Nader, Brampton, L6Y 6K7 (CA); Shi, Jian-Feng, Brampton, L6Y 6K7 (CA); Grouchy, Paul, Brampton, L6Y 6K7 (CA); Leung, Tsz Man Simon, Brampton, L6Y 6K7 (CA)
(74) Representative: Mewburn Ellis LLP

(57) **Abstract**

A system and method for smart video detection is provided herein. The system includes an onboard processing unit having a smart video detection and extraction system. The smart video detection and extraction system recognizes and detects a target of interest within an image and/or video of a target object. The smart video detection and extraction system tags an image of interest within the target of interest to generate one or more flagged images and/or video. The onboard processing unit that sends the flagged images and/or video to a ground segment via a downlink.

## Description

### Technical Field

The following relates generally to video processing and surveillance, and more particularly to systems and methods for video processing and anomaly detection in space.

### Introduction

Video surveillance in space can generate large sums of data that can be expensive to store locally on the spacecraft, requires large bandwidth of data communication link to transmit to ground, and requires large manual effort to inspect.

For example, current video footage on the International Space Station is captured with a multitude of cameras mounted in various viewpoints. During on-orbit operations, targets of interest (TOIs) such as the robot manipulator, free-flyer vehicles, or space station payloads can come into a camera's view. The camera footage is stationary most of the time, which is very similar to security camera footage. Most of this video footage is not used, due to lack of either an immediate operational need or a lack of available resources to exhaustively review this footage for other insights including system condition or performance.

Accordingly, there is a need for an improved system and method for video detection that overcomes at least some of the disadvantages of existing systems and methods.

### Summary

Provided is a system for video surveillance. The system includes an onboard processing unit having a smart video detection and extraction system. The smart video detection and extraction system recognizes and detects a target of interest within an image and/or video of a target object. The smart video detection and extraction system tags an image of interest within the target of interest to generate one or more flagged images and/or video.

The onboard processing unit may send the flagged images and/or video to a ground segment via a downlink.

The system may further include one or more passive camera for capturing passive images and/or video of the target object. The passive camera passively monitors the target object.

The system may further include an active camera for capturing active images of the target object. The active camera actively monitors the target object during an inspection. The active camera moves relative to the target object.

The smart video detection and extraction system may include a preprocessing module that pre-processes active images and passive images to generate normalized images.

The smart video detection and extraction system may include a space hardware detection model that detects aspects of the space hardware in comparison to other objects. The space hardware detection model uses the normalized images to generate segmented image data.

The segmented image data may include space hardware image segments and a first segmentation map.

The smart video detection and extraction system may include a hardware reference image generator that generates a reference image from a hardware reference model.

The smart video detection and extraction system may include a hardware anomaly detection model that compares the segmented image data to the reference image to generate a map of anomalies.

The smart video detection and extraction system may include an importance determinator module that determines if anomalies in the semantic map of anomalies reach an importance threshold.

The smart video detection and extraction system may include a graphical user interface for displaying an annotated image.

The graphical user interface may allow a user to flag wrongly-detected anomalies. The wrongly-detected anomalies may be fed back into an anomaly model updater module that updates the hardware reference model.

The onboard processing unit may be located extraterrestrially and on a spacecraft that is orbiting a celestial body or on space assets that are on celestial bodies.

The target object may be an object on or part of the spacecraft.

The system may further include a ground segment that is physically located on the Earth. The onboard processing unit may be in communication with the ground segment via the downlink.

The ground segment may include a server that receives the downlinked image data from the onboard processing unit. The ground segment may also include a user device that is able to display the flagged images.

The smart video detection and extraction system may submit the image data for downstream pipeline autonomous operations.

The onboard processing unit may include one or more graphical processing units.

The smart video detection and extraction system may be used in any one or more of space station video monitoring, lunar video monitoring, lunar rover self-health monitoring, robot self-health monitoring, space situational awareness, earth observation imaging data processing, nuclear facility health status video surveillance, video surveillance monitoring, heavy equipment inspection, and medical video monitoring.

The smart video detection and extraction system may include an adapted vision-language model utilizing one or more of few-shot or instruction-based prompting.

Provided is a method for video surveillance. The method includes recognizing and detecting a target of interest within an image frame of a target object. The method includes tagging an image of interest within the target of interest to generate one or more flagged images.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a system for video surveillance, according to an embodiment;
Figure 2 is a block diagram of a system for video detection and extraction, according to an embodiment;
Figure 3 is a flow chart of a method for video detection, according to an embodiment;
Figures 4A and 4B are images of detected target objects, according to an embodiment; and
Figures 5A, 5B, 5C are example images of the system of Figure 1.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article. While the embodiments discussed below may be relevant to detection in images or video, the approach described is applicable to anomaly detecting in both images and videos. Videos may include a plurality or series of images. A plurality of images may make up a video.

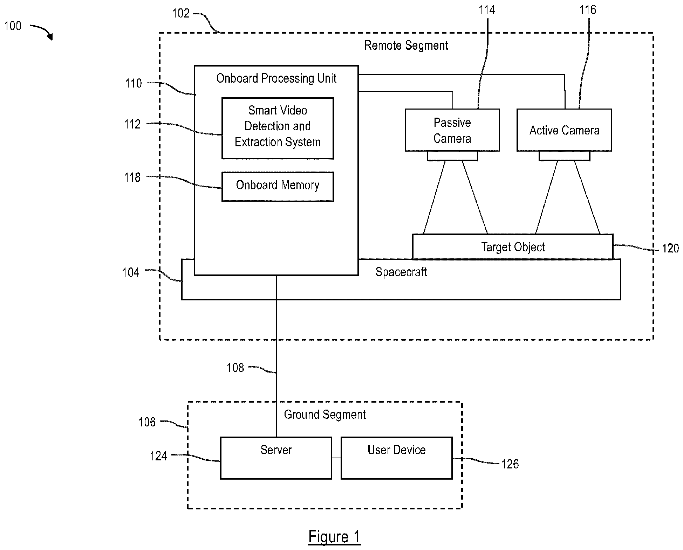

Referring now to Figure 1, shown therein is a system 100 for video surveillance, according to an embodiment. The system 100 includes a remote segment 102. The remote segment 102 may be a space segment that is located extra-terrestrially, in a particular embodiment. For example, the space segment may be located on a spacecraft 104 that is orbiting a celestial body (e.g., the Earth or the Moon). The space segment may be located on planetary surfaces such as the Moon. The spacecraft 104, may be any one or more of a space station, a satellite, a rover, a space vehicle, and other space infrastructure on the moon or other planetary bodies. The system 100 may be used in various scenarios in space and terrestrially.

The system 100 includes a ground segment 106 that is physically located on the Earth. The remote segment 102 is in communication (directly or indirectly) with the ground segment 106 via a downlink 108. The downlink 108 passes information between the remote segment 102 and the ground segment 106.

The spacecraft 104 includes an onboard processing unit 110. The onboard processing unit 110 is a computer system having sufficient processing capability to operate sophisticated algorithms as described herein. The onboard processing unit 110 may include random access memory (RAM), computer processing units (CPU), and power therefor. The onboard processing unit 110 may include a graphical processing unit (GPU) and/or field programmable gate arrays (FPGA). The onboard processing unit 110 will have power to satisfy the computer. The onboard processing unit 110 will have storage for the model weights and video and images described herein. The onboard processing unit 110 will have power and memory to perform stand-alone anomaly detection inferencing on orbit as described herein.

The onboard processing unit 110 includes a smart video detection and extraction system 112 for detecting anomalies in images and/or videos of a target object 120, and extracting relevant images and/or videos of the target object. Videos may include a series of images. Images may include a plurality of images that make up a video.

The remote segment 102 includes a passive camera 114 for capturing images of the target object 120. The passive camera 114 may be passively monitoring the target object 120. The passive camera 114 captures passive image data of the target object 120. The passive image data may be video footage of the target object 120. The passive camera 114 includes optics and a sensor that has a resolution and camera Field Of View (FOV) to capture the target object 120 and the identified anomaly of interest specified in the distance to the camera. The passive camera 114 may be, for example, a space station remote manipulator system end-effector camera, other space station cameras, or satellite surveillance cameras inspecting solar panel deployment.

The passive camera 114 may be a camera that was intended for other purposes and is able to be used for the anomaly detection in the camera's spare time. The passive camera 114 may be one that is intended for a predefined operational target but was able to capture background objects that may provide valuable information of the targets. The passive camera 114 may be a camera that is in use for another task, and any accidental imagery, that is imagery of relevant space assets, is fed into the smart video detection system 112.

The remote segment 102 includes an active camera 116. The active camera 116 may actively monitor the target object 120, for example, during an inspection where the active camera 116 is moving relative to the target object 120. The active camera 116 is designed for the anomaly task detection. The active camera 116 is actively trying to capture the anomaly in question. Active means the primary intention of this camera is designated for the mission. The active camera 116 captures active image data. The active image data may be video footage of the target object 120. The different cameras 114, 116 may have different parameters and different size images.

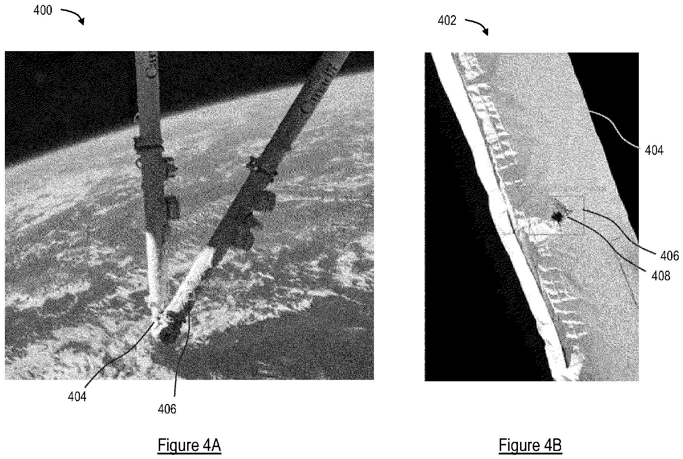

The target object 120 may be an object on or part of the spacecraft 104 (or infrastructure on the surfaces of celestial bodies). For example, the target object 120 may be a robotic arm (as shown in Figures 4A and 4B).

The passive images may be captured when the passive camera is sitting idle while the arm is performing operations. Active images are targeted operations to take image of parts of the station to look at closely. Capturing active images may include planning and ground support, whereas passive images may be captured without planning costs but may not be taking the exact close up of the region of interest. Reference images are images in the database where it can be pulled up to compare with the images taken to identify if anything has changed. If something has changed and it is unplanned then it may be identified as an anomaly.

The smart video detection system 100 may use passive images, active images, both passive images and reference images, and active images and reference images.

The onboard processing unit 110 includes an onboard memory 118. The onboard memory 118 stores image data including the passive image data and the active image data.

The passive camera 114 and/or the active camera 116 streams the image data including camera images on-board the spacecraft 104.

The smart video detection and extraction system 112 performs machine learning based inference on the onboard processing unit 110 to identify and extract relevant segments of the image data that is used to perform image processing. The machine learning based inferences are used to run trained models on orbit on new data. The smart video detection and extraction system 112 recognizes and detects a target of interest (TOI) within an image frame captured by the cameras 114, 116.

The smart video detection and extraction system 112 uses machine learning methods to recognize and detect the TOI. Machine learning methods may include a combined pipeline of individual vision-based techniques that are image processing, general machine learning, and deep learning. Without limitation, an example of image processing technique includes Gaussian convolution noise reduction. Without limitation, an example of machine learning technique includes Principal Component Analysis. Without limitation, an example of deep learning method is image segmentation using convolutional networks. Without limitation, another example includes anomaly detection with convolutional neural networks. Instead of convolutional neural networks, the smart video detection and extraction system 112 may use vision transformer networks.

The smart video detection and extraction system 112 tags an image of interest within the TOI to generate one or more flagged images. The smart video detection and extraction system 112 tags the image data for human inspection.

The smart video detection and extraction system 112 marks the video footage that is to be downlinked via downlink 108 to the ground segment 106. The onboard processing unit 110 sends the flagged images to the ground segment 106 via the downlink 108.

The ground segment 106 includes a server 124 that receives the downlinked image data from the remote segment 102. The ground segment 106 also includes a user device 126 that is able to display the flagged images. The user device 126 communicates with the server 124. The user device 126 includes a viewer application to enable a user to view the flagged images.

The smart video detection and extraction system 112 may also submit the image data for downstream pipeline autonomous operations. For example, the image data may be used to autonomously drive a robotic arm on the spacecraft 104. By way of example, autonomous vision algorithm operating on the input image may process and enhance the input imagery. The enhanced image may be used in a later pipeline component to extract target pose. The target pose may then be used to compute arm trajectory or identify obstacles that may affect the safety in the manipulator travel. For example, the system visually detects an obstacle, then the autonomous system plans around the obstacle to continue to execute the system's tasks.

The system 100 provides a novel solution for flight system image and video surveillance. Conventional spaceflight camera surveillance does not have the capability of smartly extracting only useful image data for downlink. By employing deep learning in the onboard processing unit 110, the data downlink 108 may be reduced significantly to allow room for more critical sensory data to be transmitted to the ground segment 108. Because some image footings are expensive to extract, the system 100 identifies only those valuable images.

For example, in the case of the International Space Station (ISS), an arm survey is scheduled for hardware and software. The system 100 can passively observe the images with the passive camera 114 in the camera's frame. Over-time, the collected images may cover the entire viewpoints of the target object 120. The system 100 may be an improvement to the existing camera surveillance system on the International Space Station.

The system 100 may advantageously recognize objects of interest, extract for download to the ground segment 106 to minimize downlink bandwidth usage and enable image tagging for the ground analysis.

The system 100 categorizes what has been seen previously with a first pass of labels, to flag what is redundant (those things that have been seen before) and isolate only what has changed to send only relevant data down to the ground segment 106.

The system 100 may have the ability to process the images that are difficult or not possible to process by a human. For example, where the image is dark under shadow, the system 100 may modify the image to be able to detect features under dark conditions.

Further, the system 100 may detect changes in images (e.g., clouds or lightning), that are not relevant changes, and not transmit those images to the ground segment 106.

The onboard processing unit 110 may include one or more graphical processing units (GPUs). The GPU may provide a significant speed up of the deep learning method. The GPU may enable follow-on technologies (e.g., autonomous operations) to be used in a space environment. In contrast to the system 100 and given the computation intensive nature of deep learning, conventional processing hardware on space vehicles typically lacks the capability in computing these images onboard. Depending on adaptability, GPUs may be replaced by acceleration computation processing devices including FPGAs and application specific integrated circuits (ASIC).

The system 100 may be used in ISS video monitoring, data process, storage, and downlink. The system 100 may be used in lunar video monitoring, data process, storage, and downlink. The system 100 may be used in lunar rover self health monitoring, data process, storage, and downlink. The system 100 may be used in other lunar infrastructure, such as moon bases or landing pads. The system 100 may be used in robot self health monitoring, data process, storage, and downlink. The system 100 may be used in space situational awareness or earth observation imaging data process, storage, and downlink.

Terrestrially, the system 100 may be used in nuclear facility health status video surveillance, data process, and storage. The system 100 may be used in video surveillance monitoring. The system 100 may be used in heavy equipment inspection (trains, planes, trucks, ships, pipelines). The system 100 may be used in medical video monitoring. While downlink in terrestrial application may have less impact to overall system cost, downlink costs can however still be a large burden to the central storage device, especially over extensive period of time, where the data can be collected continuously. Another benefit of the approach to terrestrial applications is the use of reference imagery. Typical terrestrial anomaly detection applications may only work on specific parts, with specific cameras and controlled lighting conditions. The systems described herein may robustly allow for inspection of larger vehicles and structures under natural lighting conditions, i.e., out in the field.

The server 124 communicates with the onboard processing unit 110. The server 124 also communicates with one or more user devices 126. The server 124 may be a purpose-built machine designed specifically for ground segment operations.

The server 124 and user device 126 may be a server computer, desktop computer, notebook computer, tablet, PDA, smartphone, or another computing device. The devices 124, 126 may include a connection with the network such as a wired or wireless connection to the Internet. In some cases, the network may include other types of computer or telecommunication networks. The devices 124, 126 may include one or more of a memory, a secondary storage device, a processor, an input device, a display device, and an output device. Memory may include random access memory (RAM) or similar types of memory. Also, memory may store one or more applications for execution by processor. Applications may correspond with software modules comprising computer executable instructions to perform processing for the functions described below. Secondary storage device may include a cloud server, a hard disk drive, floppy disk drive, CD drive, DVD drive, Blu-ray drive, or other types of non-volatile data storage. Processor may execute applications, computer readable instructions or programs. The applications, computer readable instructions or programs may be stored in memory or in secondary storage or may be received from the Internet or other network. Input device may include any device for entering information into device 124, 126. For example, input device may be a keyboard, keypad, cursor-control device, touchscreen, camera, or microphone. Display device may include any type of device for presenting visual information. For example, display device may be a computer monitor, a flat-screen display, a projector or a display panel. Output device may include any type of device for presenting a hard copy of information, such as a printer for example. Output device may also include other types of output devices such as speakers, for example. In some cases, device 124, 126 may include multiple of any one or more of processors, applications, software modules, second storage devices, network connections, input devices, output devices, and display devices.

Although devices 124, 126 are described with various components, one skilled in the art will appreciate that the devices 124, 126 may in some cases contain fewer, additional or different components. In addition, although aspects of an implementation of the devices 124, 126 may be described as being stored in memory, one skilled in the art will appreciate that these aspects can also be stored on or read from other types of computer program products or computer-readable media, such as secondary storage devices, including cloud servers, hard disks, floppy disks, CDs, or DVDs; a carrier wave from the Internet or other network; or other forms of RAM or ROM. The computer-readable media may include instructions for controlling the devices 124, 126 and/or processor to perform a particular method.

The devices 124, 126 are herein described as performing certain acts. It will be appreciated that any one or more of these devices may perform an act automatically or in response to an interaction by a user of that device. That is, the user of the device may manipulate one or more input devices (e.g., a touchscreen, a mouse, or a button) causing the device to perform the described act. In many cases, this aspect may not be described below, but it will be understood.

As an example, it is described below that the user device 126 may send information to the server 124. For example, a user using the user device 126 may manipulate one or more input devices (e.g., a mouse and a keyboard) to interact with a user interface displayed on a display of the user device 126. Generally, the device may receive a user interface from the network (e.g., in the form of a webpage). Alternatively, or in addition, a user interface may be stored locally at a device (e.g., a cache of a webpage or a mobile application).

Server 124 may be configured to receive a plurality of information, from each of the plurality of user devices 126. Generally, the information may comprise at least an identifier identifying the user. For example, the information may comprise one or more of a username, e-mail address, and password.

In response to receiving information, the server 125 may store the information in storage database. The storage may correspond with secondary storage of the user device 126. Generally, the storage database may be any suitable storage device such as a hard disk drive, a solid state drive, a memory card, or a disk (e.g., CD, DVD, or Blu-ray etc.). Also, the storage database may be locally connected with server 124. In some cases, storage database may be located remotely from server 124 and accessible to server 124 across a network for example. In some cases, storage database may comprise one or more storage devices located at a networked cloud storage provider.

The user device 126 may be associated with a user account. Any suitable mechanism for associating a device with an account is expressly contemplated. In some cases, a device may be associated with an account by sending credentials (e.g., a cookie, login, or password) to the server 124. The server 124 may verify the credentials (e.g., determine that the received password matches a password associated with the account). If a device is associated with an account, the server 124 may consider further acts by that device to be associated with that account.

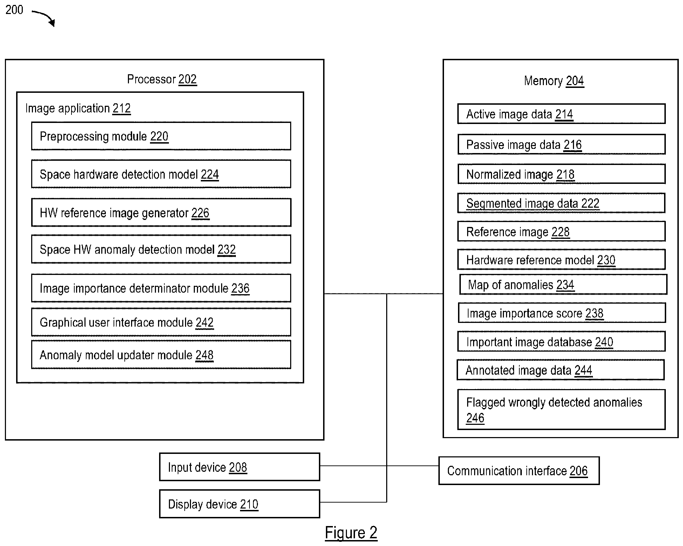

Referring now to Figure 2, shown therein is a block diagram of an onboard processing unit 200, according to an embodiment. The onboard processing unit 200 may be, for example, the onboard processing unit 110 of Figure 1.

The onboard processing unit 200 includes a processor 202 for processing actions. The onboard processing unit 200 includes a memory 204 for storing data. The data may include image data which may be in the form of a single still image, multiple images, and/or video data. The data may include actively captured data as well as archived data.

The onboard processing unit 200 includes a communication interface 206 for communicating with a ground segment server (e.g., server 124 of Figure 1).

The onboard processing unit 200 includes an input device 208 for receiving information. The onboard processing unit 200 may include a display device 210 of displaying information. The display device 210 may be included with a user device (e.g., user device 126 of Figure 1).

The processor 202 includes an image application 212. The image application 212 may be the smart video and detection extraction system 112 of Figure 1.

The memory 204 includes active image data 214 that is captured from an active camera of a target object. The memory 204 includes passive image data 216 that is captured from a passive camera of the target object. The target object may be space hardware (e.g., a robotic arm).

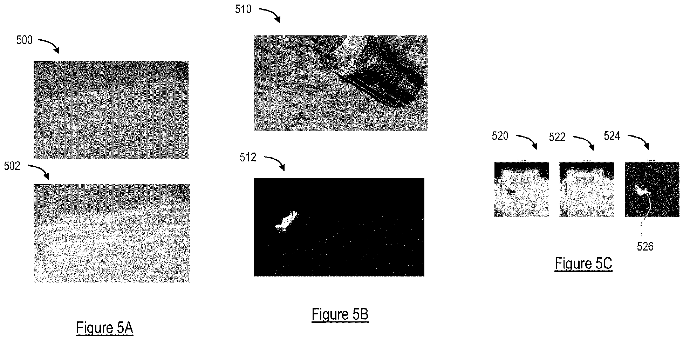

The image application 212 includes a preprocessing module 220 that pre-processes the active image data 214 and the passive image data 216, to generate normalized image data 218. The preprocessing may include any one or more of combing the active and passive images, normalizing for lighting, normalizing across camera parameters. The pre-processing module 220 may include computer vision algorithms and/or deep learning algorithms. The pre-processing module 220 may use image kernel convolution of the input image. Kernels are constructed to provide desired output effects. Pre-processing may also be done by changing the image histogram properties. The pre-processing may include stretching pixel shading via the histogram of the pixel. See, for example Figure 5A which illustrates a first image 500 before image processing and a second image 510 after image processing.

The image application 212 includes a space hardware detection model 224 that detects aspects of the space hardware in comparison to other objects in the image (e.g., background). The space hardware detection model 224 uses the normalized image 218 to generate segmented image data 222. The segmented image data 222 includes space hardware image segments (model 1 output) and a first segmentation map.

The image application 212 includes a hardware reference image generator 226 that generates a reference image 228 from a hardware reference model 230. The hardware reference image generator 226 simulates the expected view in a computer graphics engine, or by using an algorithm to search through historical imagery to find and align relevant past imagery with the current view. The hardware reference image generator 226 may pick images from any one or more of an existing image database, or generative artificial intelligence, and data generated by three-dimensional (3D) computer aided design (CAD) software.

The image application 212 includes a hardware anomaly detection model 232. The hardware anomaly detection model 232 compares the segmented image data 222 to the reference image 228 to generate a map of anomalies 234 (model 2 output). See for example, Figure 5B which illustrates a first image 510 showing the captured image, and a second image 512 showing identified anomalies. The second image 512 is the output of an anomaly mask where the system has detected an aspect of the image that is outside the ordinary using only a single input image.

In certain embodiments, the anomaly detection framework (e.g., hardware anomaly detection model 232) may further incorporate vision-language models (VLMs). VLMs are a subset of generative artificial intelligence. VLMs may be employed in an off-the-shelf manner without requiring retraining, instead utilizing few-shot or instruction-based prompting to generalize from a limited number of task-specific examples. By leveraging pretrained models trained on internet-scale data, the system may achieve extensibility across new hardware configurations and unforeseen operational contexts.

The image application 212 includes an importance determinator module 236 that determines if the anomalies in the semantic map of anomalies 234 reaches an importance threshold. The importance determinator module 236 generates an importance score 238. For example, the importance score 238 is a "yes" where the anomaly 234 is greater than the importance threshold, and the importance score 238 is "no" where the anomaly 234 is less than the importance threshold.

The images that include the importance score 238 (yes) that is above the importance threshold is stored in an important image database 240 of images for downlink to a user device (e.g., user device 126 of Figure 1).

The image application 212 includes a graphical user interface 242 for displaying an annotated image 244 (see, for example Figures 4A and 4B). The graphical user interface may be at the ground station or onboard.

The graphical user interface 242 allows a user to flag wrongly-detected anomalies 246. The wrongly-detected anomalies 246 are fed back into an anomaly model updater module 248 that updates the hardware reference model 230. The imagery with the wrongly-detected anomalies may be used as reference imagery in future runs of the system 200. The system 200 may hardcode the location of the wrongly-detected anomalies and have the post processing steps ignore those areas of the hardware.

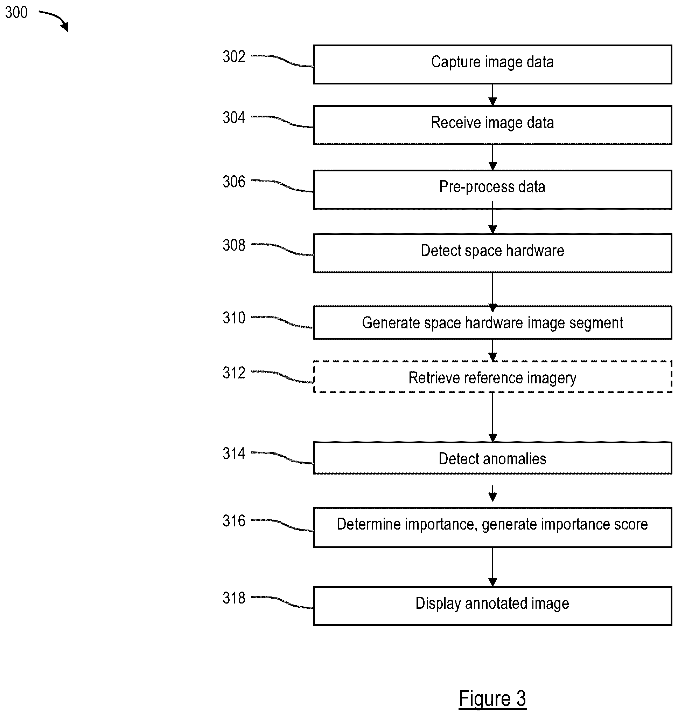

Referring now to Figure 3, shown therein is a method 300 for video detection, according to an embodiment.

At 302, image data of a target object is captured by one or more cameras.

At 304, the image data is received from the cameras and stored in a memory.

At 306, the image data is pre-processed.

At 308, space hardware is detected in the image data.

At 310, space hardware image segment data is generated.

At 312, optionally, reference imagery is retrieved to help detect anomalies. Relevant historical reference imagery is retrieved and processed to match the current view. Alternatively or additionally, synthetic reference imagery is generated using a graphics engine. The reference imagery may be real historical imagery or synthetic imagery). See, for example, Figure 5C which illustrates a current image 520, a reference image 522, and an anomaly image 524. The reference image 522 may have been an image that was taken previously (e.g., over a year) where the lighting and background is different but the robot configuration is the same (i.e., looking at the same angle and face). In this example, the method 300 compares the reference image 522 with the current image 520 to generate the anomaly image 524 and identify an anomaly 526, even if the reference image 520 is not exactly the same as the current image 522.

At 314, anomalies are detected in the space hardware image segment data.

At 316, importance of the anomalies are determined and an importance score is generated.

At 318, important images are displayed including annotations identifying the anomalies that have an importance score above an importance threshold.

Anomaly correction may be conducted post processing when the image and anomaly image are downlinked to the ground.

Referring now to Figures 4A and 4B, shown therein are images 400, 402 of targets objects, according to an embodiment. The images 400, 402 may be obtained using the systems 100, 200 or the method 300. In particular, the images 400, 402 display micrometeoroid damage on a boom of a robotic arm that was identified by the systems and methods recited herein.

The image 400 is an image of a target object 404 (in particular a robotic arm on a space station). The image 400 includes an annotation 406 that identifies an anomaly of the target object 404.

The image 402 is a closer view of the target object 404. The image 402 includes the annotation 406. The image 402 shows the anomaly 408 captured within the annotation 206. The anomaly 408 is a hole in the target object 404, for example caused by impact of space debris.

The evolution of space exploration missions emphasizes the need for enhanced maintenance and inspection methods to ensure the longevity and reliability of space assets. Traditional inspection methods are labor intensive and reliant on manual processes and direct observation, requiring a high level of expertise and attention to detail, as inspectors compare current imagery with previous records to detect changes over time. The systems and methods described herein provide an artificial intelligence based visual inspection tool, utilizing synthetic imagery and domain adaptation techniques for training robust deep learning models. The systems and methods described herein analyzes archived imagery captured from onboard cameras, to improve inspecting, monitoring, and analyzing space assets for issues and anomalies. The systems and methods described herein leverages artificial intelligence models capable of detecting anomalies in space hardware components within archived imagery. The archived imagery may include structural damage due to micrometeoroid or orbital debris (MMOD) strikes, wear and tear, and other unexpected deviations from the expected nominal condition.

A challenge with AI-based visual analysis is access to the large labelled data sets that are necessary for training deep learning models. The systems and methods described herein may use synthetic imagery for training AI models, overcoming the relative scarcity of imagery, in particular for rare anomalies on space infrastructure. Synthetic images, generated through computer graphics and simulation techniques, can depict various space assets under different conditions, including wear, damage, and environmental effects, and yield precise ground truth labels by default. These images provide a rich, controlled dataset for training the deep learning models described herein to recognize and analyze features and anomalies in space assets.

Domain adaptation techniques can bridge the gap between the synthetic training data and real-world application. These techniques allow the AI models described herein to retain their performance on real imagery by minimizing the differences between the synthetic training domain and the real-world target domain. This approach enables the models described herein that are trained on synthetic data to apply learned features and anomaly detection capabilities effectively to the analysis of real archived imagery from space missions.

By leveraging synthetic imagery and domain adaptation, the systems and methods described herein may accurately identify a wide range of issues, including structural damage and other anomalies that could compromise the integrity and functionality of space assets. The ability of the systems and methods described herein to analyze vast quantities of archived imagery autonomously represents a significant advancement over manual inspection methods, providing comprehensive, detailed insights into the condition of space assets over time.

Several key features make the systems described herein powerful for ensuring the integrity and functionality of space assets. Among these, the ability to classify anomalies; the tool can discern between various types of irregularities and damage by learning from vast synthetic imagery datasets. This classification capability allows for the accurate identification of specific issues, from minor wear and tear to critical structural failures, facilitating targeted intervention. Additionally, the systems described herein include temporal analysis features that enhance the system's effectiveness by monitoring changes over time, enabling it to flag new anomalies as they arise. This is crucial in the space environment where even small changes can escalate into serious problems due to the harsh conditions and operational stresses on the equipment.

The systems and methods described herein are readily adaptable to different hardware conditions and to various modules and equipment on space stations, as well as to other space assets such as visiting vehicles, planned Commercial LEO Destinations (CLDs), the Lunar Gateway station, and assets on the lunar surface. The speed of inspection offered by the systems described herein may reduce the time required to analyze vast amounts of imagery, leading to significant computational resource savings and allowing for more frequent inspections, including via the analysis of accidental imagery of space assets captured during regular operations. The precision improvement in identifying and categorizing anomalies minimizes the risk of overlooking critical issues or misidentifying nominal conditions as problems, further enhancing the safety, operational efficiency, and longevity of space asset components. These features collectively ensure that the systems described herein are not just technological advancements but also provide a transformative approach to maintaining and operating space station assets.

The systems described herein, including those powered by synthetic imagery and domain adaptation, marks a significant leap forward in the inspection and maintenance of space assets. The systems may address the limitations of traditional inspection methods, offering a scalable, accurate, and efficient solution for the analysis of space asset imagery. By revolutionizing how these assets are inspected, monitored, and analyzed, the systems not only enhance the operational efficiency and safety of current missions but also lay the groundwork for the sustainable exploration and utilization of space environments in the future. The system's development underscores the potential of artificial and machine learning technologies to transform space exploration, paving the way for more autonomous, resilient, and ambitious missions.

While the above description provides examples of one or more apparatus, methods, or systems, it will be appreciated that other apparatus, methods, or systems may be within the scope of the claims as interpreted by one of skill in the art.

## Claims

1. A system for video surveillance, the system comprising:
an onboard processing unit having a smart video detection and extraction system;
wherein the smart video detection and extraction system recognizes and detects a target of interest within an image and/or video of a target object; and
wherein the smart video detection and extraction system tags an image of interest within the target of interest to generate one or more flagged images and/or video.

2. The system of claim 1, wherein the onboard processing unit sends the flagged images and/or video to a ground segment via a downlink.

3. The system of claim 1 further comprising:
one or more passive cameras for capturing passive images and/or video of the target object, wherein the passive camera passively monitors the target object.

4. The system of claim 1 further comprising:
an active camera for capturing active images and/or video of the target object, wherein the active camera actively monitors the target object during an inspection, and wherein the active camera moves relative to the target object.

5. The system of claim 1, wherein the smart video detection and extraction system includes a preprocessing module that pre-processes active images and passive images to generate normalized images.

6. The system of claim 5, wherein the smart video detection and extraction system includes a space hardware detection model that detects aspects of the space hardware in comparison to other objects, wherein the space hardware detection model uses the normalized images to generate segmented image data.

7. The system of claim 6, wherein the segmented image data includes space hardware image segments and a first segmentation map.

8. The system of claim 7, wherein the smart video detection and extraction system includes a hardware reference image generator that generates a reference image from a hardware reference model.

9. The system of claim 8, wherein the smart video detection and extraction system includes a hardware anomaly detection model that compares the segmented image data to the reference image to generate a map of anomalies.

10. The system of claim 9, wherein the smart video detection and extraction system includes an importance determinator module that determines if anomalies in the semantic map of anomalies reach an importance threshold.

11. The system of claim 10, wherein the smart video detection and extraction system includes a graphical user interface for displaying an annotated image, and wherein the graphical user interface allows a user to flag wrongly-detected anomalies, and wherein the wrongly-detected anomalies are fed back into an anomaly model updater module that updates the hardware reference model.

12. The system of claim 1, wherein the smart video detection and extraction system includes an adapted vision-language model utilizing one or more of few-shot or instruction-based prompting.

13. The system of claim 1, wherein the onboard processing unit is located extra-terrestrially and is located on a spacecraft that is orbiting a celestial body or on space assts that are on celestial bodies.

14. The system of claim 13, wherein the target object is an object on or part of the spacecraft.

15. A method according to any one or more of claims 1 to 14.
